# EUROPÄISCHE PATENTSCHRIFT

(11) **EP 3 335 007 B1**
(45) Veröffentlichungstag und Bekanntmachung des Hinweises auf die Patenterteilung: **04.09.2019**
(21) Anmeldenummer: 16751194.8
(22) Anmeldetag: 20.07.2016
(51) Int. Cl.: G01C 21/16, G01C 25/00

(54) **NAVIGATIONSVORRICHTUNG MIT DREHTISCH FÜR EINE UMSCHLAGSMESSUNG UND VERFAHREN ZUM BETREIBEN DER NAVIGATIONSVORRICHTUNG**
NAVIGATION DEVICE WITH TURNTABLE FOR INDEX MEASURING AND METHOD FOR OPERATING THE NAVIGATION DEVICE
DISPOSITIF DE NAVIGATION COMPORTANT UNE PLATINE ROTATIVE POUR UNE MESURE DE VIRAGE ET PROCÉDÉ DE FONCTIONNEMENT DU DISPOSITIF DE NAVIGATION

(30) Priorität: 14.08.2015 DE 102015113486
(43) Veröffentlichungstag der Anmeldung: 20.06.2018
(73) Patentinhaber: Northrop Grumman LITEF GmbH, 79115 Freiburg (DE)
(72) Erfinder: HERBERTH, Uwe, 79232 Hugstetten (DE); PROBST, Uwe, 79111 Freiburg (DE); DECK, Matthias, 79189 Bad Krozingen (DE)
(74) Vertreter: Müller Hoffmann & Partner
(86) Internationale Anmeldenummer: PCT/EP2016/067320
(87) Internationale Veröffentlichungsnummer: WO 2017/029057

(56) Entgegenhaltungen:
- EP-A2- 2 239 539
- US-A1- 2003 084 704
- US-A1- 2003 236 628
- US-A1- 2005 022 402

## Beschreibung

Die Erfindung betrifft eine Navigationsvorrichtung mit einem für eine Umschlagsmessung geeigneten Drehtisch sowie ein Verfahren zum Betreiben der Navigationsvorrichtung.

Für die Navigation von beweglichen Objekten, z.B. im Bereich der Schifffahrt, existieren festgeschriebene Anforderungen an das Navigationsequipment, wie zum Beispiel in der IMO A.821 dokumentiert. Wenn das Navigationsequipment eine Inertialsensorik (zum Beispiel eine Inertial-Messeinheit) aufweist, muss diese entsprechend leistungsfähig und genau sein, was zu erheblichen Kosten führt.

Bei Anwendungen, bei denen ein geringeres Budget zur Verfügung steht, genügt jedoch oft der Einsatz von günstigem Navigationsequipment, welches zwangsläufig eine weniger genaue Sensorik verwendet. Es hat sich herausgestellt, dass einige der für die Navigationsperformance relevanten Sensorfehler mit Hilfe einer Umschlagsmessung und mittels mathematischer Verfahren geschätzt und kompensiert werden können. Auf diese Weise können auch mit einfacheren Sensoren die vorgeschriebenen Anforderungen aus den Normen erfüllt werden.

Je nach Anforderungen an die Navigationsperformance muss die Umschlagsmessung jedoch häufig und in regelmäßigen, definierten Abständen durchgeführt werden.

Üblicherweise wird für die Umschlagsmessung ein mechanischer Drehtisch vorgesehen, auf dem die Inertial-Messeinheit angebracht ist, so dass sie in bestimmten Zeitabständen zusammen mit dem Drehtisch gedreht werden kann. Der Drehtisch bewirkt eine jeweils entgegengesetzte Drehung (Hin und Her) um 180 Grad, so dass systembedingte Messfehler beobachtet und kompensiert werden können. Die Auslösung einer Drehung des Drehtischs kann manuell oder automatisch erfolgen.

Ein derartiges Verfahren zur Umschlagsmessung mit einem Drehtisch ist zum Beispiel aus der EP 2239539 und US 2010/0256907 A1 bekannt. Bei diesem Verfahren wird der Drehtisch z.B. in regelmäßigen Zeitintervallen, z.B. alle zwei Minuten, um 180 Grad in entgegengesetzte Richtung gedreht. Der Vorgang einer Drehung dauert 2 Sekunden.

Mit Hilfe der Umschlagsmessung kann unter Anderem das sogenannte Heading, also der Kurs bzw. die Orientierung des Objekts (z.B. des Schiffs) relativ zum Bezugssystem, mit höherer Genauigkeit bestimmt werden. Die Navigationsvorrichtung kann insbesondere für ein sogenanntes "attitude heading reference system" (AHRS) genutzt werden.

Jedoch kann die intensive Benutzung des Drehtisches, insbesondere bei Nutzung des Navigationssystems über eine längere Zeitdauer, zu Verschleiß bzw. Abnutzung der mechanisch beweglichen Teile und damit zu Ungenauigkeiten bei der mechanischen Drehung des Drehtisches, insbesondere hinsichtlich der Präzision der End- bzw. Drehstellungen führen. Diese Ungenauigkeiten können durch die zunehmend ungenaue Positionierung des Drehtischs zu einer Zunahme der Navigationsfehler mit der Nutzungsdauer sowie zu einer verkürzten Lebensdauer des gesamten Geräts wegen mangelnder Genauigkeit führen.

Der Erfindung liegt die Aufgabe zugrunde, eine Navigationsvorrichtung anzugeben, die das Verfahren der Umschlagsmessung nutzt und mit der eine Verlängerung der Lebensdauer des Geräts bei Einhaltung von hohen Qualitätsvorgaben möglich ist.

Die Aufgabe wird durch eine Navigationsvorrichtung mit den Merkmalen von Anspruch 1 gelöst. Ein Verfahren zum Betreiben einer derartigen Navigationsvorrichtung ist im nebengeordneten Patentanspruch angegeben. Vorteilhafte Ausgestaltungen sind in den abhängigen Ansprüchen definiert.

Es wird eine Navigationsvorrichtung angegeben, mit: einem Drehtisch, der in Abhängigkeit von einem Drehsteuersignal um eine Achse in wenigstens zwei unterschiedliche Drehstellungen drehbar ist; einer auf dem Drehtisch angeordneten Inertial-Messeinheit, die mit dem Drehtisch drehbar ist; und mit einer Auswerteeinrichtung zum Auswerten von Messdaten von der Inertial-Messeinheit; wobei durch die Auswerteeinrichtung die Güte der Messdaten feststellbar ist, und wobei durch die Auswerteeinrichtung ein Drehsteuersignal erzeugbar ist, wenn die festgestellte Güte eine vorgegebene Mindestgüte nicht erreicht, derart, dass daraufhin der Drehtisch in die jeweils andere Drehstellung gedreht wird.

Die Inertial-Messeinheit wird häufig auch als IMU (inertial measurement unit) bezeichnet. Dabei kann es sich um ein oder mehrere Drehratensensoren, zum Beispiel einen fiber optical gyro (FOG), auch in Kombination mit einem oder mehreren Beschleunigungsmessern, handeln. Typischerweise wird aber für die Benutzung in Verbindung mit einer Umschlagsmessung ein preiswerteres System eingesetzt, wie zum Beispiel ein MEMS (micro electro mechanical system).

Die Inertial-Messeinheit wird vom dem Drehtisch getragen, der die jeweils wechselseitige Drehung in die beiden unterschiedlichen Drehstellungen bewirkt, wenn ein Drehsteuersignal erzeugt wird. Insbesondere erfolgt dabei eine Drehung um die Hochachse (Gierachse) oder senkrecht zur lokalen Horizontalen.

Die Auswerteeinrichtung ist bei Inertial-Messeinheiten ohnehin stets vorhanden und dient unter anderem auch dazu, kontinuierlich oder in regelmäßigen Abständen die Güte des Messsignals zu bestimmen.

Wenn festgestellt wird, dass die Güte nicht mehr die vorgegebene Mindestgüte erreicht, somit also die Qualität der Messung fraglich ist, wird eine Drehung des Drehtischs und damit der Inertial-Messeinheit um die Drehachse ausgelöst. Der Drehtisch wird mit der Messeinheit um zum Beispiel 180 Grad (oder auch um einen anderen Winkel) gedreht, so dass sich systembedingte Messfehler ausgleichen und von der Auswerteeinrichtung auch entsprechend aus dem Messsignal korrigierend herausgerechnet werden können.

Anders als beim Stand der Technik, bei dem die Drehung im regelmäßigen, vorgegebenen Zeitabständen erfolgt, ist es erfindungsgemäß vorgesehen, die Drehung nur dann auszulösen, wenn die nachlassende Qualität der Messdaten dies erfordert. Dadurch können insbesondere bei neuen, noch keinen Verschleiß aufweisenden Vorrichtungen wesentlich größere Zeiträume genutzt werden, in denen keine Drehung des Drehtischs erforderlich ist. Bei älteren Systemen, die bereits einem gewissen Verschleiß unterliegen, kann dagegen aufgrund einer Überwachung der Messqualität bzw. der Qualität der Messdaten die Frequenz der Drehung erhöht werden, so dass die Performance des Gesamtsystems noch längere Zeit aufrecht erhalten werden kann, indem häufiger eine Drehung, das heißt eine Umschlagsmessung, kommandiert wird. Eine weiter steigende mechanische Abnutzung der mechanischen Komponenten und ein erhöhter Stromverbrauch müssen dabei in Kauf genommen werden.

Auf Basis der inertialen Sensordaten der Inertial-Messeinheit werden Informationen wie die Lage, die Position etc. an die übergeordnete Schiffssteuerung übergeben. Dafür ist üblicherweise eine Plattformrechnung auf Basis eines Kalman-Filters notwendig. Das Filter kann außer mit internen Sensordaten auch mit Daten von externen Sensoren (wie zum Beispiel GPS, Star-Tracker etc.) gestützt werden. Haben diese Daten eine ausreichende Qualität, kann nachfolgend die Güte der inertialen Sensordaten in bekannter Weise bestimmt werden.

Liegt die im Kalman-Filter berechnete Güte der inertialen Sensordaten unter der vorgegebenen Mindestgüte, wird die Umschlagsmessung zur Reduzierung der inertialen Sensorfehler ausgelöst. Dadurch, dass nur bei Bedarf in Abhängigkeit von der Güte der Sensordaten Umschlagsmessungen durchgeführt werden, wird die Anzahl der Umschlagsmessungen verringert. So kann der Verschleiß des mechanischen Drehtisches minimiert werden, wodurch sich auch die Lebensdauer des Geräts verlängert. Weiterhin kann ein niedrigerer Stromverbrauch erreicht werden.

Die Güte der Messdaten kann insbesondere aufgrund der Varianz der Messdaten bestimmbar sein. Wenn zum Beispiel durch das Kalman-Filter eine niedrige Varianz der Messdaten erkannt wird, spricht dies für eine hohe Güte. Wenn hingegen die Varianz hoch ist, ist die Güte der Messdaten niedrig. Die Mindestgüte wird dann als die maximal zulässige Varianz definiert.

Die Güte der Messdaten kann darüber hinaus auch auf andere, an sich bekannte Weise bestimmt werden, z.B. durch eine Plausibilitätsprüfung der Messdifferenzen.

Die Mindestgüte kann ein vordefinierter, fester Schwellwert sein. Alternativ ist es möglich, dass die Mindestgüte ein dynamischer Schwellwert ist, der von der Auswerteeinrichtung in Abhängigkeit von weiteren Bedingungen veränderbar ist.

Eine Festlegung eines dynamischen Schwellwerts kann z.B. in Abhängigkeit von den jeweiligen Betriebsmodi oder der Fahrzeugdynamik erfolgen. Auch der Filterzustand (eingeschwungen, alignment) oder die verfügbaren Stützdaten können Kriterien sein, anhand derer ein dynamischer Schwellwert jeweils festgelegt wird.

Wie bereits erläutert, ist es vorteilhaft, wenn die Drehstellungen um 180 Grad zueinander versetzt sind, so dass jeweils eine Vorwärtsdrehung und eine Rückwärtsdrehung entgegengesetzt um 180 Grad erfolgen können.

Ebenso ist es aber auch möglich, andere Drehwinkel zu definieren, wobei dann entsprechende Umrechnungen der Messergebnisse erforderlich sind. Insbesondere können die Drehstellungen somit auch um einen beliebigen Winkel zueinander versetzt sein.

Darüber hinaus ist es möglich, dass die Messungen kontinuierlich, also auch während einer Drehung in beliebigen (Zwischen-)Drehstellungen, zumindest aber in den beiden festgelegten (End-)Drehstellungen durchgeführt werden.

Die Inertial-Messeinheit kann insbesondere zum Bestimmen eines Headings ausgebildet sein.

Bei einer Ausführungsform ist ein Drehantrieb vorgesehen, zum Drehen des Drehtischs zwischen den Drehstellungen. Der Drehantrieb kann zum Beispiel ein Elektromotor sein, der von einer entsprechenden Steuerung ansteuerbar ist. Die Ansteuerung erfolgt insbesondere dann, wenn die Steuerung des Motos ein Drehsteuersignal empfängt, dass die Drehung auslösen soll. Weiterhin sind entsprechende Einrichtungen vorhanden, mit denen sichergestellt ist, dass die Drehung jeweils exakt über den vorgegebenen Winkel (zum Beispiel 180 Grad) erfolgt.

Ein Verfahren zum Betreiben einer oben beschriebenen Navigationsvorrichtung weist die folgenden Schritte auf:
- Betreiben einer um eine Achse drehbar angeordneten Inertial-Messeinheit wechselweise in einer ersten Drehstellung und in einer z.B. um 180 Grad versetzten zweiten Drehstellung;
- Auswerten von Messdaten der Inertial-Messeinheit und Bestimmen der Güte der Messdaten;
- Vergleichen der Güte mit einer Mindestgüte;
- Drehen der Inertial-Messeinheit in die jeweils andere Drehstellung immer dann, wenn die festgestellte Güte nicht die Mindestgüte erreicht.

Das Vergleichen der Güte mit der Mindestgüte kann kontinuierlich erfolgen. Ebenfalls ist es aber auch möglich, den Vergleich in regelmäßigen Zeitabständen durchzuführen.

Das Auswerten der Messdaten und das Vergleichen der Güte mit der Mindestgüte ist z.B. auch während eines Drehvorgangs möglich.

Diese und weitere Vorteile und Merkmale der Erfindung werden nachfolgend anhand eines Beispiels unter Zuhilfenahme der begleitenden Figuren näher erläutert. Es zeigen:
- **FIG. 1**: eine Draufsicht auf eine Navigationsvorrichtung mit unterschiedlichen Stellungen eines Drehtischs;
- **FIG. 2**: ein Ablaufdiagramm mit dem Verfahren einer Umschlagsmessung; und
- **FIG. 3**: ein Zeitdiagramm mit dem Verhältnis von festgestellter Güte und vorgegebener Mindestgüte.

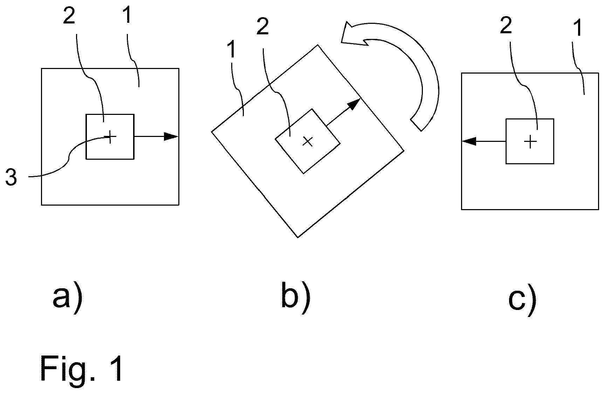

Figur 1 zeigt in schematischer Draufsicht eine Navigationsvorrichtung mit einem Drehtisch 1, der eine Inertial-Messeinheit 2 trägt und zusammen mit der Inertial-Messeinheit 2 um eine Achse 3 drehbar ist.

Bei der Inertial-Messeinheit 2 kann es sich z.B. um eine MEMS-Messeinheit handeln. Der Aufbau von MEMS-Messeinheiten ist aus dem Stand der Technik bekannt, so dass sich eine weitere Beschreibung erübrigt.

Durch einen auf dem Drehtisch 1 eingezeichneten Pfeil ist jeweils die Orientierung des Drehtischs 1 erkennbar.

In Figur 1a) steht der Drehtisch 1 mit der Inertial-Messeinheit 2 in einer ersten Stellung.

Wenn ein nicht dargestellter Drehantrieb ein entsprechendes Drehsteuersignal erhält, wird bei der Umschlagsmessung die Drehung des Drehtischs 1 ausgelöst und der Drehtisch 1 verschwenkt zusammen mit der Inertial-Messeinheit 2 (Figur 1b) in eine um 180 Grad versetzte Drehstellung (Figur 1c). Durch die geänderte Richtung des Pfeils ist erkennbar, dass die Stellung des Drehtischs 1 in den Figuren 1a und 1c um 180 Grad zueinander verdreht ist.

Die Drehung des Drehtischs 1 kann insbesondere durch eine nicht dargestellte Auswerteeinrichtung der Inertial-Messeinheit 2 ausgelöst werden. Die Auswerteeinrichtung überwacht unter anderem auch die Qualität der Messsignale von der Inertial-Messeinheit 2 und kann bei nicht mehr ausreichender Qualität eine Drehung des Drehtischs 1 veranlassen, wie nachfolgend noch erläutert wird.

In beiden festgelegten Drehstellungen wird jeweils die vorgesehene Messung durch die Inertial-Messeinheit 2 durchgeführt und zum Beispiel ein Bias (als typischer Messfehler) bestimmt. Die Messungen können aber auch in allen anderen beliebigen Drehstellungen (z.B. auch den Zwischenstellungen zwischen den festgelegten End-Drehstellungen) und/oder auch während einer Drehung durchgeführt werden.

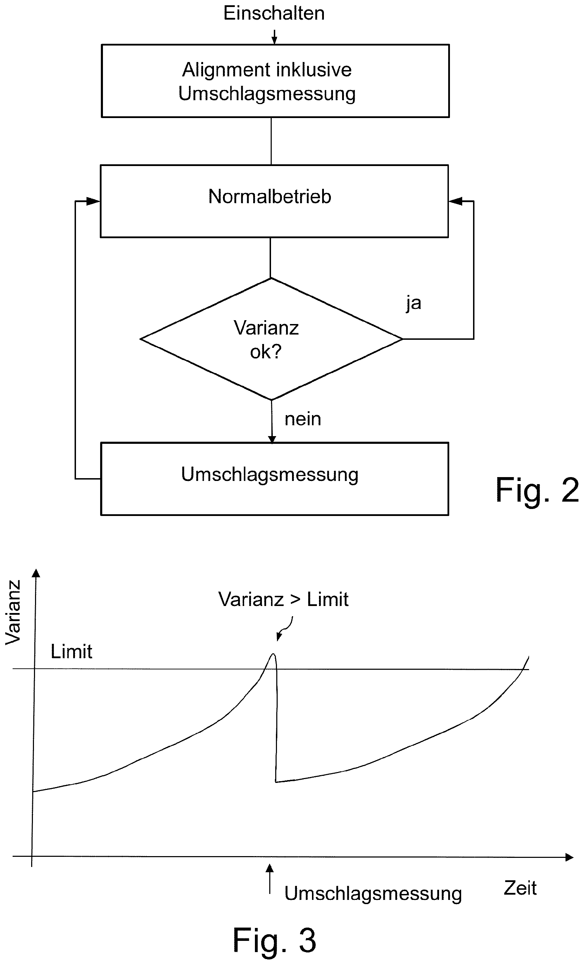

Figur 2 zeigt ein Blockdiagramm mit dem Verfahrensablauf bei der Umschlagsmessung.

Nach dem Einschalten des Systems erfolgt eine Ausrichtung ("Alignment") der Inertial-Messeinheit inklusive einer Umschlagsmessung zur Initialisierung des Gesamtsystems.

Danach erfolgt der Normalbetrieb mit einer an sich bekannten Messung durch die Inertial-Messeinheit.

Kontinuierlich oder in bestimmten Zeitabständen wird überprüft, ob die Varianz der von der Inertial-Messeinheit gelieferten Messdaten in Ordnung ("ok") ist. Das bedeutet, es wird geprüft, ob die Varianz als Kriterium für die Güte der Messdaten einen vorgegebenen Grenzwert unterschreitet (niedrige Varianz bedeutet hohe Güte) oder überschreitet (hohe Varianz bedeutet niedrige Güte). Der Grenzwert entspricht insoweit einem Schwellwert für die Mindestgüte.

Wenn festgestellt wird, dass die Varianz in Ordnung ist, also die vorgegebene Mindestgüte eingehalten wird, wird der Normalbetrieb fortgeführt.

Wenn hingegen festgestellt wird, dass die Varianz den zulässigen Grenzwert überschritten hat, also die Güte der Messdaten nicht mehr ausreicht, wird eine Umschlagsmessung durchgeführt. Das bedeutet, dass eine Drehung des Drehtischs 1 ausgelöst wird, wie in Figur 1 gezeigt. Die Drehung bewirkt, dass die Inertial-Messeinheit 2 um 180 Grad verdreht wird, so dass sich Messfehler, wie zum Beispiel der Bias, in entgegengesetzter Richtung ausbreiten und auf diese Weise kompensieren.

Die Überprüfung der Varianz kann kontinuierlich oder auch in regelmäßigen Zeitabständen erfolgen.

Figur 3 zeigt ein Diagramm mit dem zeitlichen Verlauf der Varianz.

Zu Beginn der Messung, im eingeschwungenen Zustand des Filters, ist die Varianz niedrig und steigt über die Zeit langsam an, bis eine Situation erreicht wird, bei der die Varianz das vorgegebene Limit (den Schwellwert) überschreitet. In diesem Fall wird die vorgegebene Mindestgüte nicht mehr erreicht, wodurch eine Umschlagsmessung ausgelöst wird, wie in Figur 3 gekennzeichnet.

Danach beginnt die Messung erneut, jetzt wieder mit niedriger Varianz, die langsam ansteigt, bis schließlich erneut der vorgegebene Schwellwert überschritten wird.

Die Zeitspannen zwischen den einzelnen Umschlagsmessungen (Drehungen des Drehtischs 1) können je nach Gegebenheiten erheblich länger sein als die Zeiträume, die im Stand der Technik vorgegeben sind (dort zum Beispiel 2 bis 10 Minuten). Dadurch erfolgen die Drehungen des Drehtischs 1 seltener, so dass der Verschleiß vermindert wird.

Wenn das System bereits ein erhebliches Lebensalter erreicht hat, ist es möglich, dass aufgrund von Verschleiß höhere Ungenauigkeiten entstehen. Dann können die Drehungen des Drehtischs 1 auch häufiger, also zum Beispiel mit Zeitperioden von unter 2 Minuten erfolgen.

Auf diese Weise kann eine bedarfsgerechte Umschlagsmessung bereitgestellt werden, die das Messverhalten an die jeweiligen technischen, insbesondere mechanischen Möglichkeiten anpasst.

## Patentansprüche

1. Navigationsvorrichtung, mit
- einem Drehtisch (1), der in Abhängigkeit von einem Drehsteuersignal um eine Achse (3) in wenigstens zwei unterschiedliche Drehstellungen drehbar ist;
- einer auf dem Drehtisch (1) angeordneten Inertial-Messeinheit (2), die mit dem Drehtisch drehbar ist; und mit
- einer Auswerteeinrichtung zum Auswerten von Messdaten von der Inertial-Messeinheit (2);
wobei
- durch die Auswerteeinrichtung die Güte der Messdaten feststellbar ist; **dadurch gekennzeichnet, dass**
- durch die Auswerteeinrichtung ein Drehsteuersignal erzeugbar ist, wenn die festgestellte Güte eine vorgegebene Mindestgüte nicht erreicht, derart, dass daraufhin der Drehtisch (1) in die jeweils andere Drehstellung gedreht wird.

2. Navigationsvorrichtung nach Anspruch 1, wobei die Auswerteeinrichtung ein Kalman-Filter aufweist.

3. Navigationsvorrichtung nach Anspruch 1 oder 2, wobei die Drehstellungen um einen beliebigen Winkel, insbesondere um 180 Grad zueinander versetzt sind.

4. Navigationsvorrichtung nach einem der vorstehenden Ansprüche, wobei die Güte der Messdaten aufgrund der Varianz der Messdaten bestimmbar ist.

5. Navigationsvorrichtung nach einem der vorstehenden Ansprüche, wobei die Mindestgüte
- ein vordefinierter, fester Schwellwert ist; oder
- ein dynamischer Schwellwert ist, der von der Auswerteeinrichtung in Abhängigkeit von weiteren Bedingungen veränderbar ist.

6. Navigationsvorrichtung nach einem der vorstehenden Ansprüche, wobei die Inertial-Messeinheit zum Bestimmen eines Headings ausgebildet ist.

7. Navigationsvorrichtung nach einem der vorstehenden Ansprüche, wobei ein Drehantrieb vorgesehen ist, zum Drehen des Drehtischs (1) zwischen den Drehstellungen.

8. Verfahren zum Betreiben einer Navigationsvorrichtung nach einem der vorstehenden Ansprüche, mit den Schritten
- Betreiben einer um eine Achse drehbar angeordneten Inertial-Messeinheit (2) wechselweise in einer ersten Drehstellung und in einer zweiten Drehstellung;
- Auswerten von Messdaten der Inertial-Messeinheit (2) und Bestimmen der Güte der Messdaten; **gekennzeichnet durch** die Schritte
- Vergleichen der Güte mit einer Mindestgüte;
- Drehen der Inertial-Messeinheit (2) in die jeweils andere Drehstellung immer dann, wenn die festgestellte Güte nicht die Mindestgüte erreicht.

## Claims

1. A navigation device comprising
- a turntable (1) that can be rotated depending on a rotary control signal around an axis (3) into at least two different rotary positions;
- an inertial measuring unit (2) that is arranged on the turntable (1) and can be rotated together with the turntable; and
- an evaluation unit for evaluating of measurement data of the inertial measuring unit (2); wherein
- by the evaluation unit the quality of the measurement data can be detected;
**characterized in that**
- by the evaluation unit a rotary control signal can be generated, if the determined quality does not reach a predetermined minimum quality, such that then the turntable (1) is rotated to the respective other rotary position.

2. The navigation device according to claim 1, wherein the evaluation unit comprises a Kalman filter.

3. The navigation device according to claim 1 or 2, wherein the rotary positions are offset with respect to each other by an arbitrary angle, in particular by 180 degrees.

4. The navigation device according to one of the preceding claims, wherein the quality of the measurement data can be determined based on the variance of the measurement data.

5. The navigation device according to one of the preceding claims, wherein the minimum quality
- is a predefined, fixed threshold; or
- is a dynamic threshold that can be changed by the evaluation unit depending on further conditions.

6. The navigation device according to one of the preceding claims, wherein the inertial measuring unit is configured to determining a heading.

7. The navigation device according to one of the preceding claims, wherein a rotary drive is provided that is configured to rotate the turntable (1) between the rotary positions.

8. A method for operating a navigation device according to one of the preceding claims, comprising the steps of
- operating an inertial measuring unit (2) that is arranged rotatable around an axis alternatingly in a first rotary position and in a second rotary position;
- evaluating of measurement data of the inertial measuring unit (2) and determining the quality of the measurement data;
**characterized by** the steps of
- comparing the quality with a minimum quality;
- rotating the inertial measuring unit (2) into the respective other rotary position always then, if the determined quality does not reach the minimum quality.

## Revendications

1. Dispositif de navigation, avec
- une platine rotative (1) qui est rotative autour d'un axe (3) dans au moins deux positions de rotation différentes en fonction d'un signal de commande de rotation ;
- une unité de mesure inertielle (2), disposée sur la platine rotative (1), qui est rotative avec la platine rotative ; et avec
- un système d'évaluation pour l'évaluation de données de mesure de l'unité de mesure inertielle (2) ;
dans lequel
- la qualité des données de mesure peut être établie par le système d'évaluation, **caractérisé en ce que**
- un signal de commande de rotation peut être généré par le système d'évaluation, lorsque la qualité établie n'atteint pas une qualité minimale prédéfinie, de sorte que subséquemment la platine rotative (1) soit tournée respectivement dans l'autre position de rotation.

2. Dispositif de navigation selon la revendication 1, dans lequel le système d'évaluation comprend un filtre de Kalman.

3. Dispositif de navigation selon la revendication 1 ou 2, dans lequel les positions de rotation sont décalées les unes par rapport aux autres d'un angle au choix, en particulier de 180 degrés.

4. Dispositif de navigation selon l'une des revendications précédentes, dans lequel la qualité des données de mesure peut être déterminée sur la base de la variance des données de mesure.

5. Dispositif de navigation selon l'une des revendications précédentes, dans lequel la qualité minimale
- est une valeur de seuil fixe prédéfinie ; ou
- est une valeur de seuil dynamique qui peut être modifiée par le système d'évaluation en fonction d'autres conditions.

6. Dispositif de navigation selon l'une des revendications précédentes, dans lequel l'unité de mesure inertielle est conçue pour la détermination d'un cap.

7. Dispositif de navigation selon l'une des revendications précédentes, dans lequel il est prévu un entraînement rotatif pour la rotation de la platine rotative (1) entre les positions de rotation.

8. Procédé de fonctionnement d'un dispositif de navigation selon l'une des revendications précédentes, avec les étapes de
- fonctionnement d'une unité de mesure inertielle (2) disposée de manière rotative autour d'un axe en alternance dans une première position de rotation et dans une seconde position de rotation ;
- évaluation de données de mesure de l'unité de mesure inertielle (2) et détermination de la qualité des données de mesure ; **caractérisé par** les étapes de
- comparaison de la qualité à une qualité minimale ;
- rotation de l'unité de mesure inertielle (2) respectivement dans l'autre position de rotation chaque fois que la qualité établie n'atteint pas la qualité minimale.
